Europäisches Patentamt

European Patent Office

Office européen des brevets

(19)

(11) Numéro de publication: **0 210 100**
**B1**

(12) # FASCICULE DE BREVET EUROPEEN

(45) Date de publication du fascicule du brevet:
08.03.89

(51) Int. Cl.⁴: **F02B 37/12**

(21) Numéro de dépôt: 86401458.4

(22) Date de dépôt: 01.07.86

(54) Perfectionnements aux moteurs à combustion interne suralimentés.

(30) Priorité: 18.07.85 FR 8511009

(43) Date de publication de la demande:
28.01.87 Bulletin 87/5

(45) Mention de la délivrance du brevet:
08.03.89 Bulletin 89/10

(84) Etats contractants désignés:
AT CH DE GB IT LI NL SE

(56) Documents cités:
FR-A- 864 443
FR-A- 2 265 979
FR-A- 2 308 792
FR-A- 2 378 178
FR-A- 2 415 200
GB-A- 2 041 084

(73) Titulaire: ETAT-FRANCAIS représenté par le DELEGUE
GENERAL POUR L'ARMEMENT (DPAG), Bureau des
Brevets et Inventions de la Délégation Générale pour
l'Armement 26, Boulevard Victor, F-75996 Paris
Armées(FR)

(72) Inventeur: Melchior, Jean F., 126 Boulevard de
Montparnasse, F-75014 Paris(FR)
Inventeur: André, Thierry M., 7 Quai Voltaire,
F-75007 Paris(FR)

(74) Mandataire: Lemoine, Michel et al, Cabinet Michel
Lemoine et Bernasconi 13 Boulevard des Batignolles,
F-75008 Paris(FR)

## Description

L'invention est relative à un moteur à combustion interne à chambres de travail de volume variable munies chacune d'au moins une entrée d'air et d'au moins une sortie de gaz, ce moteur étant suralimenté par un groupe turbocompresseur comportant au moins un compresseur entraîné mécaniquement par au moins une turbine, chacune des susdites entrées d'air communiquant avec la sortie d'air du compresseur alors que chacune des susdites sorties de gaz communique avec au moins un collecteur de gaz relié à l'entrée de gaz de la turbine, lequel moteur comporte en outre un conduit de dérivation qui relie la sortie d'air du compresseur à l'entrée de gaz de la turbine en court-circuitant les chambres de travail et qui est muni de moyens d'étranglement à section de passage variable, agencés de manière à engendrer une perte de charge telle que la différence de pression qui en résulte entre la sortie d'air du compresseur et l'entrée de gaz de la turbine ne dépende pratiquement que de la valeur de la pression régnant à la sortie d'air du compresseur, lesquels moyens d'étranglement sont agencés de manière que la somme des forces, dues à la perte de charge qu'ils engendrent et s'appliquant sur ces moyens d'étranglement, soit compensée par une force d'équilibrage telle que la résultante de ces forces soit pratiquement nulle, lesquels moyens d'étranglement sont reliés à un organe de commande sensible à un premier paramètre de fonctionnement du moteur relié de façon biunivoque à la pression totale régnant à la sortie d'air du compresseur et à un deuxième paramètre de fonctionnement du moteur relié de façon biunivoque à la pression totale régnant directement en amont de la turbine, lequel organe de commande est agencé de manière telle d'une part qu'il tende à fermer les moyens d'étranglement lorsque ces deux pressions tendent à se rapprocher l'une de l'autre et réciproquement tende à ouvrir lesdits moyens d'étranglement lorsque ces pressions tendent à s'écarter l'une de l'autre et d'autre part que la différence de ces pressions ne dépende essentiellement que de la pression totale régnant à la sortie d'air du compresseur et varie dans le même sens que cette pression totale.

Un moteur de ce type est décrit dans le US-A 4 089 173.

Dans les moteurs à combustion interne suralimentés, on cherche à obtenir une puissance maximale avec un débit d'air de suralimentation minimal et un rendement maximal.

Parmi les facteurs de perte de tels moteurs, l'un des plus importants réside dans le fait que l'on ne sait pas récupérer la totalité de l'énergie utilisable dans les chambres de travail à la fin de la course de détente. Cette énergie utilisable est très importante en comparaison de l'énergie mécanique recueillie sur l'arbre du moteur. Elle peut atteindre jusqu'à 20% de cette dernière.

Du fait de l'échauffement des gaz provoqué par la combustion du combustible dans les chambres de travail, la pression régnant dans celles-ci en fin de détente est beaucoup plus élevée que la pression régnant dans les chambres de travail au début de la course de compression. A titre d'exemple, si la température de l'air au début de la compression (au point de volume maximal des chambres de travail, dit "Point Mort Bas" ou "PMB") est de 100°C et si cette température est de 900°C au même PMB à la fin de la course de détente, la pression est alors de:

$$\frac{900 + 273}{100 + 273} = 3,15$$

fois plus élevée que la pression régnant dans le collecteur d'admission et encore plus élevée que la pression régnant dans le collecteur de gaz.

Au moment où la communication, entre les chambres de travail et le collecteur de gaz, est ouverte à la fin de la course de détente, il se produit donc une chute brutale, sans récupération de travail, de la pression régnant dans les chambres de travail. In en résulte une perte très importante de l'énergie utilisable qui est alors disponible dans les chambres de travail et qui représente, ainsi qu'on l'a rappelé ci-dessus, une proportion très importante de l'énergie mécanique qui est recueillie par l'arbre du moteur.

Il est bien connu qu'un moyen d'améliorer les performances du moteur (par augmentation de la puissance utile et du rendement et par réduction corrélative du débit d'air spécifique) consiste à réduire cette perte de l'énergie utilisable disponible à l'échappement du moteur en perfectionnant la liaison entre les chambres de travail et le collecteur de gaz du moteur.

L'énergie utilisable disponible dans les chambres de travail à la fin de la course de détente peut être partiellement récupérée en associant au moteur à combustion interne un turbocompresseur de suralimentation.

Bien que l'invention s'applique à tout moteur à combustion interne, qu'il soit à allumage commandé ou à allumage par compression, à quatre temps ou à deux temps, elle sera décrite ici, pour faciliter l'exposé, dans le cadre des moteurs à quatre temps suralimentés par turbocompresseur. Pour ces moteurs, il est connu de récupérer partiellement l'énergie utilisable qui est disponible dans les chambres de travail en fin de détente en faisant communiquer celles-ci, à l'aide de tubulures de gaz, avec au moins un collecteur de gaz qui aboutit à l'entrée de la turbine. Compte tenu de la température des gaz à l'entrée de la turbine, il est possible à celle-ci d'entraîner le compresseur d'air avec un taux de détente notablement inférieur au rapport de pression du compresseur, et ceci d'autant plus que le rendement global du turbocompresseur est plus élevé (ce rendement global étant le produit des rendements isentropiques individuels du compresseur et de la turbine et du rendement mécanique et volumétrique du turbocompresseur).

Lorsque le volume du collecteur de gaz est élevé, si on le compare par exemple à la cylindrée totale des chambres de travail, la vitesse d'écoulement des gaz dans ce collecteur est faible et la pression totale (statique + dynamique) $P_3$ des gaz à l'entrée de la turbine est sensiblement la même que la pression statique $P_5$ régnant dans le collecteur de gaz.

On a ainsi réalisé un collecteur dit "à pression constante". De ce fait, le moteur à quatre temps aspire de l'air pendant la course d'aspiration à une pression nettement supérieure à la pression régnant dans le collecteur de gaz; le travail de refoulement des gaz pendant la course d'échappement sera donc inférieur au travail reçu par le piston pendant la course d'aspiration. Ce travail positif de transvasement, qui vient s'ajouter au travail positif développé pendant le cycle moteur (compression – détente), est en fait prélevé sur l'énergie utilisable disponible dans les chambres de travail en fin de détente.

Une telle récupération est donc en relation directe avec la différence relative:

$$\frac{P'_2 - P_3}{P'_2}$$

entre les pressions $P'_2$ et $P_3$ régnant respectivement dans les collecteurs d'air et de gaz, aux bornes donc des chambres de travail du moteur.

A titre d'exemple, en réalisant un groupe de suralimentation avec des turbocompresseurs modernes à haut rendement global (de l'ordre de 70%) disposés en deux étages de compression en série, avec refroidissement intermédiaire à 45°C, il est possible de comprimer l'air de suralimentation à 10 bars absolus en entraînant les turbines, également disposées en série, avec des gaz à 650°C de température totale et une pression totale absolue de 5 bars seulement. Avec de tels ensembles, on dispose ainsi d'une différence de pression de $\Delta Pm = 5$ bars aux bornes du moteur et d'une énergie potentielle récupérable sur l'arbre du moteur de:
$(P'_2 \times Cyl) - (P_3 \times Cyl) = \Delta Pm \times Cyl$
où Cyl représente la cylindrée, c'est-à-dire la différence entre le volume maximal et le volume minimal des chambres de travail.

Cette énergie directement récupérable sur l'arbre du moteur, qui s'ajoute à celle recueillie pendant le cycle moteur du fait de la combustion interne du combustible introduit dans les chambres de travail, constitue une énergie gratuite qui augmente la puissance du moteur, réduit le débit d'air spécifique (en kg d'air par kW.h fourni) et donc la taille et le coût des organes assurant la suralimentation et finalement augmente le rendement de l'installation en diminuant la consommation spécifique de carburant.

Compte tenu de la température des gaz disponible à l'entrée de la turbine et du rendement global du turbocompresseur, cette énergie potentielle récupérable peut encore être accrue si l'on observe que les pistons se déplaçant dans les chambres de travail du moteur ne sont sensibles, pendant les courses d'admission et de refoulement, qu'aux pressions statiques (et non totales) régnant respectivement en amont et en aval de ces chambres, les vitesses des pistons étant en effet de l'ordre de 10 m/s, c'est-à-dire très faibles devant la vitesse du son. Si l'on organise la communication entre la sortie des chambres de travail et l'entrée de là turbine pour que la colonne de gaz circulant dans le collecteur de gaz soit mise en vitesse à un nombre de Mach élevé (c'est-à-dire de 0,3 au moins, pouvant atteindre ou même dépasser 0,8), la pression statique régnant dans le collecteur d'échappement sera abaissée de façon notable.

A titre d'exemple, la mise en vitesse, jusqu'au nombre de Mach de 0,75, d'une colonne de gaz dont la pression totale est de 5 bars et la température totale est de 650°C, abaissera la pression statique à la valeur absolue de 3,5 bars. L'abaissement de la température sera, quant à lui, de 78°C, la température statique de l'écoulement dans le collecteur de gaz étant donc de 572°C.

En revanche, le turbocompresseur est par essence une machine qui est sensible aux pressions et températures totales, en raison des vitesses d'écoulement qui y atteignent des nombres de Mach voisins de l'unité. Dans le cas traité ci-dessus à titre d'exemple, si la pression totale et la température totale sont maintenues respectivement à 5 bars (pression absolue) et à 650°C, la pression de l'air disponible dans le collecteur d'admission du moteur (dans la mesure où ce collecteur est dimensionné pour que les vitesse de l'air y restent faibles) restera égale à 10 bars. La différence de pression statique aux bornes du moteur passera donc de $10-5 = 5$ bars à $10-3,5 = 6,5$ bars, en augmentant ainsi de 30% l'énergie récupérable à l'échappement du moteur.

L'énergie nécessaire à la mise en vitesse de la colonne de gaz circulant dans le collecteur de gaz est prélevée sur l'énergie utilisable disponible dans les chambres de travail à la fin de la course de détente. Une organisation de la communication entre les chambres de travail et l'entrée de la turbine du type évoqué ci-dessus, susceptible de provoquer efficacement cette mise en vitesse de la colonne de gaz dans le collecteur d'échappement, est connue et a été décrite par exemple dans les FR-A 2 378 178, 2 415 200 et 2 478 736.

Une telle organisation nécessite les caractéristiques constructives suivantes:

A – Une liaison extrêmement courte et de faible volume entre la sortie des chambres de travail et le collecteur de gaz, grâce à des tubulures en forme de tuyères convergentes dont le rapport de section entre l'entrée (côté chambre de travail) et la sortie (côté collecteur) est de préférence voisin de 2 et dont la sortie est orientée selon le sens de l'écoulement dans le collecteur de gaz. Le très faible volume et l'étranglement de la section de passage de ces tubulures ont pour effet de favoriser la récupération de l'énergie disponible dans les chambres de travail au début de la phase d'échappement. La pression dans la tubulure s'élève en effet très rapidement dès l'ouverture de l'organe distributeur d'échappement et se rapproche ainsi de la pression régnant dans la chambre de travail, ce qui réduit considérablement la perte d'énergie par laminage au passage dudit organe distributeur. L'énergie utilisable disponible dans les chambres de travail en fin de détente est ainsi préservée de façon maximale. L'accélération dans la tubulure convergente et l'orientation de celle-ci selon le sens de l'écoulement dans le collecteur de gaz permet de convertir efficacement cette énergie potentielle en énergie cinétique contribuant à accélérer la colonne de gaz qui s'écoule dans ledit collecteur.

B – Le regroupement de l'échappement d'une pluralité de chambres de travail dans un collecteur de gaz dont le diamètre est faible par rapport au diamètre du piston (généralement de l'ordre de la moitié). Le dimensionnement du collecteur peut être exprimé ainsi:

$$Se = (n.\ Sp) \times \frac{Vp}{Ve} \times \frac{\rho'2}{\rho_5} \times \frac{\alpha}{2k},$$

relations dans laquelle:

Se = section du collecteur de gaz
Sp = surface transversale de chaque piston
n = nombre de pistons
n.Sp = surface transversale totale des pistons dont les cylindres sont reliés à un même collecteur de gaz
Vp = vitesse moyenne de chaque piston
Ve = vitesse des gaz à l'extrémité aval du collecteur de gaz
$\rho'2$ = densité de l'air d'admission
$\rho_5$ = densité des gaz d'échappement
$\alpha$ = coefficient de débit du moteur (compris entre 0,5 et 1,2)
k = 1 (moteur à deux temps) ou 2 (moteur à quatre temps);
le nombre de Mach de l'écoulement des gaz, à l'extrémité aval du collecteur, étant:

$$\mathcal{M} = \frac{Ve}{a5}, \quad \text{où}$$

a5 = $\sqrt{1{,}33 \times 287 \times T5}$ avec
T5 = température d'échappement en °K,
Si T5 = 873° K (600° C), a5 = 577 m/s, $\mathcal{M} = 0,3$
et Ve = 173 m/s.

C – Le réglage de l'ordre d'allumage des différentes chambres de travail regroupées sur le même collecteur de gaz de façon à organiser une injection de quantité de mouvement, en provenance de chaque chambre de travail, la plus régulière possible et la moins perturbatrice de l'échappement d'une chambre sur l'autre.

D – Une liaison, aussi simple et courte que possible, entre l'extrémité aval (dans le sens de l'écoulement des gaz) et l'entrée de la turbine pour éviter au maximum les pertes de pression totale de l'écoulement à grande vitesse, soit par frottement, soit par accident de parcours (courbure, ou variation brusque de section); à titre d'exemple, la perte de pression totale par frottement d'un écoulement de gaz, ayant un nombre de Mach égal à 0,7, est de l'ordre de 1% par unité de longueur égale au diamètre du collecteur.

E – L'interposition éventuelle, entre l'extrémité aval du collecteur de gaz et l'entrée de la turbine, d'un diffuseur capable de ralentir l'écoulement à un nombre de Mach de l'ordre de 0,25. Mais constatant que l'écoulement sera alors à nouveau accéléré jusqu'au nombre de Mach de l'ordre de 1 (généralement dans un anneau de tuyères fixes, appelé "distributeur") avant de pénétrer dans la roue de turbine, il est clair qu'il peut être préférable de supprimer ce ralentissement dans le diffuseur puis l'accélération dans le distributeur en remplaçant la susdite caractéristique E) par la suivante:

E' – L'organisation du carter d'entrée des gaz à la turbine pour maintenir sensiblement constante la vitesse des gaz jusqu'à leur entrée dans la roue de détente de la turbine.

L'organisation de la liaison entre les chambres de travail et la roue de détente de la turbine, du type décrit ci-dessus, permet de récupérer une part importante de l'énergie utilisable disponible dans les chambres de travail à la fin de la course de détente.

Il est connu par ailleurs que l'utilisation de turbocompresseurs à très hautes performances et à rapports de pression élevés pose de délicats problèmes d'adaptation à un moteur à combustion interne à chambres de combustion de volume variable, en particulier pour éviter le phénomène indésirable du pompage du turbocompresseur qui se produit lorsque le compresseur a été réglé pour travailler dans sa zone de rendement maximal.

Ce phénomène peut être éliminé par l'adjonction d'un conduit de dérivation qui relie la sortie d'air du compresseur à l'entrée de gaz de la turbine en court-circuitant les chambres de travail et qui est muni de moyens d'étranglement à section de passage variable, agencés de manière à engendrer une perte de charge telle que la différence de pression qui en résulte entre la sortie du compresseur et l'entrée de la turbine ne dépende pratiquement que de la valeur de la pression régnant en un point quelconque du circuit reliant la sortie d'air du compresseur à l'entrée de gaz de la turbine. Cette solution a été décrite notamment dans les US-A 3 988 894, 4 089 173, 4 125 999 et 4 233 815. Ainsi qu'il ressort du premier paragraphe de la description de la présente demande, c'est à des moteurs équipés d'un tel conduit de dérivation que l'invention est relative.

Par ailleurs, si l'on veut réaliser un moteur qui puisse délivrer une puissance élevée en acceptant des pressions d'air de suralimentation très élevées (supérieures à 5 bars et pouvant atteindre ou même dépasser 10 bars), sans surcharge mécanique, il est connu d'abaisser son rapport volumétrique de compression effectif (c'est-à-dire le rapport entre le volume des chambres de travail au début de la compression et le volume minimal de celles-ci) à des valeurs qui peuvent être égales, voire inférieures, à 7. Dans ce cas, le moteur connaît des difficultés de démarrage et de fonctionnement à faible puissance qui peuvent être éliminées par l'adjonction d'une chambre de combustion auxiliaire qui est alimentée en air frais par l'intermédiaire du conduit de dérivation et qui permet au turbocompresseur de fonctionner indépendamment du moteur, voire à l'arrêt de celui-ci si le turbocompresseur est équipé de moyens de démarrage autonomes. Une telle solution est décrite par exemple dans les FR-A 2 179 310, 2 222 537, 2 265 979 et 2 472 082. Ainsi qu'il ressortira de ce qui suit, l'invention concerne de préférence, mais non exclusivement, des moteurs équipés d'une telle chambre de combustion auxiliaire.

La combinaison des deux techniques rappelées ci-dessus et décrites respectivement dans les FR-A 2 378 178, 2 415 200 et 2 478 736 et dans les US-A 3 988 894, 4 089 173, 4 125 999 et 4 233 815, qui permettrait de réaliser des moteurs ayant à la fois de très fortes puissances spécifiques et des rendements élevés, pose toutefois des problèmes techniques qui n'ont pu être résolus jusqu'ici de façon satisfaisante.

L'invention a essentiellement pour but de résoudre ces problèmes techniques.

A cet effet, l'inventiion a pour objet un moteur à combustion interne, du type défini en préambule, que est caractérisé en ce que

a) chacune des susdites sorties de gaz communique par une tubulure avec le ou chaque collecteur de gaz;

b) le collecteur de gaz a une section sensiblement constante et suffisamment faible pour que, en fonctionnement au régime nominal de rotation du moteur, la vitesse de l'écoulement des gaz dans le collecteur de gaz, directement en aval de la dernière jonction avec lesdites tubulures, soit au moins égale au nombre de Mach de 0,3;

c) la jonction entre le conduit de dérivation en aval des moyens d'étranglement et le collecteur de gaz est située en amont, dans le sens de l'écoulement des gaz provenant des chambres de travail et circulant dans le collecteur de gaz, de la première jonction dudit collecteur de gaz avec lesdites tubulures; et

d) le susdit premier paramètre de fonctionnement du moteur est relié de façon biunivoque à la pression totale régnant directement à la sortie d'air du compresseur.

De préférence, les susdites tubulures ont chacune la forme d'une tuyère convergente dont la sortie, à la jonction avec le collecteur de gaz, est orientée selon le sens d'écoulement des gaz dans ce collecteur.

La caractéristique partielle (a) qui vient d'être définie a pour effet d'abaisser la pression statique dans le collecteur de gaz et permet, comme expliqué ci-dessus, de récupérer une proportion importante de l'énergie utilisable disponible dans les chambres de travail du moteur.

La caractéristique partielle (b), selon laquelle la jonction entre la partie aval du conduit de dérivation et l'entrée de la turbine est localisée dans une partie du collecteur où la vitesse d'écoulement des gaz est minimale lors du fonctionnement du moteur à son régime de rotation nominal, a pour effet de diminuer les pertes de charge et d'empêcher que soit perturbé l'écoulement à grande vitesse en provenance du collecteur de gaz.

Lors du fontionnement du moteur au régime de rotation nominal, l'effet d'éjection provoqué par l'injection de quantité de mouvement, provenant de chaque chambre de travail, dans le collecteur de gaz spécialement agencé à cet effet, est maximal de telle sorte que la pression statique régnant en tête de ce collecteur est minimale, c'est-à-dire précisément au point de jonction aval entre le conduit de dérivation et le collecteur de gaz. La différence de pression s'exerçant de part et d'autre des moyens d'étranglement (en position de fermeture maximale) du conduit de dérivation est de ce fait maximale.

Inversement, lors du fonctionnement du moteur au régime de ralenti, voire à l'arrêt du moteur si celui-ci équipé d'une chambre de combustion auxiliaire, l'effet d'éjection décrit ci-dessus est minimal, voire nul. Dans ce cas, la majeure partie (ralenti) ou la totalité (arrêt du moteur) de l'écoulement dans le collecteur de gaz transite par le conduit de dérivation, à travers les moyens d'étranglement de celui-ci en position d'ouverture maximale. Dans cette situation, la perte de pression totale, par frottement et accidents de parcours de l'écoulement tout le long du collecteur de gaz, sera maximale et, de ce fait, la pression statique régnant en tête du collecteur de gaz, c'est-à-dire au point de jonction avec le conduit de dérivation, sera maximale, de telle sorte que la différence de pression, s'exerçant de part et d'autre des moyens d'étranglement du conduit de dérivation, sera minimale.

On voit que cette différence de pression statique peut varier dans de grandes proportions, du simple au double voire davantage, selon le régime de fonctionnement du moteur.

Or on sait par ailleurs que, pour que le turbocompresseur puisse fonctionner à son rendement maximal sans rencontrer le problème de pompage du compresseur, il est nécessaire que la différence entre la pression totale régnant à la sortie du compresseur et la pression totale régnant à l'entrée de la turbine soit pratiquement insensible aux variations du régime de rotation du moteur et ne dépende pratiquement que de la valeur de la pression totale régnant à la sortie du compresseur.

Cette condition est donc antinomique avec la localisation des moyens d'étranglement du conduit de dérivation.

Il y avait donc là un préjugé technique à vaincre, ce qui démontre l'activité inventive de la solution conforme à l'invention et plus particulièrement de ses caractéristiques partielles (c) et (d).

En particulier, grâce à la caractéristique partielle (c), les moyens d'étranglement sont rendus insensibles à la différence de pression statique qu'ils engendrent du fait du débit les traversant.

Quant à la caractéristique partielle (d), elle permet de réaliser la condition de fonctionnement optimale du turbocompresseur sans risque de pompage du compresseur, quel que soit le régime de fonctionnement du moteur.

Selon une première solution particulièrement avantageuse, l'organe de commande susvisé est constitué par un piston délimitant aux moins deux chambres de volume variable dont l'une communique avec une première cavité où règne une pression statique qui varie de façon biunivoque dans le même sens que la pression totale régnant immédiatement à l'entrée de la turbine et dont l'autre communique avec une deuxième cavité où règne une pression $P_2^*$ qui varie de façon biunivoque dans le même sens que la pression totale qui règne à la sortie du compresseur en amont des susdits moyens d'étranglement, cette pression $P_2^*$ étant égale à une fraction de la pression $P_2$.

Selon une deuxième solution également avantageuse, l'organe de commande susvisé est constitué par un piston différentiel comportant au moins trois surfaces d'action mobiles ou déformables de sections différentes, dont celle de plus grande section délimite une chambre de volume variable qui communique avec une première cavité où règne une pression statique variant de façon biunivoque dans le même sens que la pression totale régnant immédiatement en amont de la turbine et dont les deux autres surfaces d'action délimitent deux autres chambres de volume variable dont l'une communique avec une deuxième cavité où règne une pression statique sensiblement égale à la pression totale régnant à la sortie du compresseur, en amont des susdits moyens d'étranglement, et l'autre communique avec une troisième cavité où règne une pression de référence P*.

De préférence, la première cavité susvisée est constituée par l'espace situé en aval du distributeur de la turbine et en amont de la roue de ladite turbine. Selon une variante relative à un moteur dont le groupe turbocompresseur comporte au moins une première et une deuxième turbines disposées en série, la première cavité peut être constituée par la liaison entre la sortie de la première turbine et l'entrée de la deuxième turbine.

Les deux solutions exposées ci-dessus permettent de réaliser, avec le maximum de simplicité, la condition de fonctionnement optimal du turbocompresseur sans risque de pompage, quel que soit le régime de fonctionnement du moteur.

Ainsi qu'exposé ci-dessus, l'invention est applicable de préférence, mais non exclusivement, aux moteurs à combustion interne, du type défini ci-dessus, dont le conduit de dérivation comporte une chambre de combustion auxiliaire.

Dans ce cas, la chambre de combustion auxiliaire étant constituée d'une zone primaire de combustion et d'une zone secondaire de dilution située en aval de ladite zone primaire, le moteur conforme à l'invention peut en outre être caractérisé en ce que le conduit de dérivation est divisé en au moins deux branches dont la première alimente en air ladite zone secondaire et est munie des susdits moyens d'étranglement, désignés ci-après par "premiers moyens d'étranglement", et dont la deuxième alimente en air ladite zone primaire et est munie de deuxième moyens d'étranglement à section de passage variable indépendamment de celle des premiers moyens d'étranglement. De préférence, les deuxièmes moyens d'étranglement sont reliés à un deuxième organe de commande agencé pour faire varier la section de passage des deuxièmes moyens d'étranglement en fonction de la pression de l'air régnant à la sortie du compresseur et selon une loi établie à l'avance.

Enfin, selon un perfectionnement qui permet de simplifier notablement la construction, les susdites tubulures sont constituées respectivement par des tuyères coniques concentriques au collecteur de gaz et l'ensemble du collecteur et des tubulures est constitué de tronçons tous semblables comportant chacun, d'une part, une âme cylindrique qui possède sensiblement le diamètre du collecteur de gaz et dont l'extrémité amont, dans le sens de l'écoulement des gaz, communique soit avec la sortie de gaz du tronçon précédent s'il en existe, soit avec le conduit de dérivation lorsqu'il s'agit du premier tronçon dans le sens de l'écoulement des gaz et, d'autre part, une enveloppe concentrique délimitant une cavité qui communique avec la sortie de gaz de l'une des chambres de travail et qui coopère avec l'extrémité aval de l'âme cylindrique pour former une tuyère concentrique. Dans le cas où le conduit de dérivation comporte une chambre de combustion auxiliaire constituée d'une zone primaire de combustion et d'une zone secondaire de dilution située en aval de ladite zone primaire, l'extrémité amont du premier tronçon communique avec la sortie de gaz de ladite zone secondaire de dilution.

L'invention va être maintenant décrite plus en détail à l'aide des dessins annexés qui en illustrent schématiquement des modes de réalisation préférés.

La figure 1 de ces dessins représente schématiquement un moteur à combustion interne établi conformément à un premier mode de réalisation de l'invention, dont les moyens d'étranglement du conduit de dérivation sont assujettis à une commande électrique.

Les figures 2, 3 et 4 représentent schématiquement un moteur à combustion interne établi selon trois autres modes de réalisation de l'invention, dont les moyens d'étranglement du conduit de dérivation sont assujettis à diverses commandes pneumatiques.

Les figures 5, 6 et 7 illustrent diverses façon de prélever la pression $P_3$.

La figure 8 représente partiellement un moteur à combustion interne établi conformément à un cinquième mode de réalisation de l'invention et muni d'une chambre de combustion auxiliaire.

La figure 9 représente schématiquement un moteur à combution interne établi conformément à un sixième mode de réalisation de l'invention et muni lui aussi d'une chambre de combustion auxiliaire.

La figure 10 représente, à plus grande échelle, un détail de la figure 9.

Les figures 11 et 12 illustrent le fonctionnement du mode de réalisation des figures 9 et 10, par des diagrammes des vitesses et des pressions le long du collecteur de gaz, respectivement lorsque les premiers moyens d'étranglement sont fermés et ouverts au maximum.

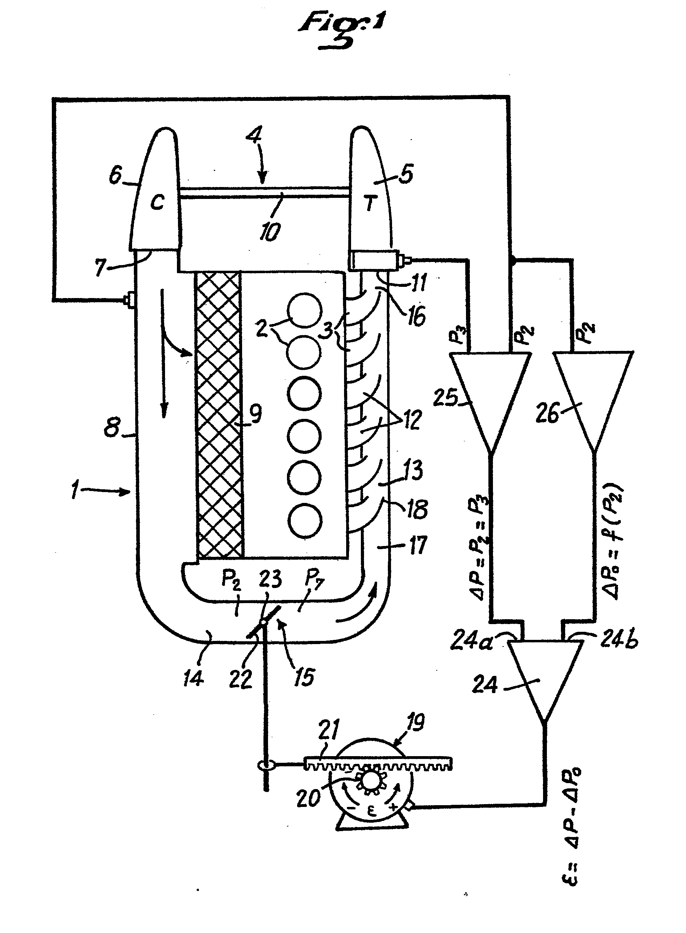

Le moteur Diesel suralimenté 1, qui est représenté schématiquement à la figure 1, comprend des chambres de travail 2 de volume variable qui sont constituées en général chacune par un cylindre dont le volume est rendu variable par le déplacement d'un piston. Chacune de ces chambres de travail est munie d'une entrée d'air (non montrée) et d'une sortie de gaz 3. Le moteur 1 est suralimenté par un groupe turbocompresseur 4 essentiellement constitué d'une turbine 5 et d'un compresseur 6 dont la sortie 7 communique avec l'entrée d'air de chacune des chambres de travail 2 par l'intermédiaire d'au moins un collecteur d'admission 8. Un refroidisseur d'air de suralimentation 9 est généralement disposé en amont de ce collecteur d'admission 8. Le compresseur 6 est entraîné mécaniquement, par exemple par l'intermédiaire d'un arbre 10, par la turbine 5 dont l'entrée de gaz 11 est reliée à la sortie de gaz 3 des chambres de travail 2 par l'intermédiaire de tubulures de gaz individuelles 12 et d'au moins un collecteur de gaz 13.

Le moteur 1 comporte un conduit de dérivation 14 qui est muni de moyens d'étranglement 15 à section de passage variable et qui fait communiquer la sortie d'air 7 du compresseur 6 avec l'entrée de gaz 11 de la turbine 5 en court-circuitant les chambres de travail 2. Les moyens d'étranglement 15 sont agencés de manière à engendrer une perte de charge $P_2 - P_7$ ($P_2$ et $P_7$ étant les pressions régnant respectivement de part et d'autre des moyens d'étranglement 15) telle que la différence qui en résulte entre la pression totale $P_2$ régnant à la sortie 7 du compresseur 6 et la pression totale $P_3$ régnant à l'entrée 11 de la turbine 5 soit pratiquement indépendante du rapport entre le débit d'air dans le conduit de dérivation 14 et le débit délivré par le compresseur 6 mais qui varie dans le même sens que la susdite pression $P_2$.

Cela étant, conformément à l'invention, le collecteur de gaz 13 a une section sensiblement constante et suffisamment faible pour que, en fonctionnement au régime normal de rotation du moteur 1, la vitesse de l'écoulement de gaz dans ce collecteur 13, directement en aval de la dernière jonction 16 avec les tubulures 12, soit au moins égale au nombre de Mach de 0,3. Par "dernière jonction", on entend ici celle qui est désignée par 16 et qui est atteinte la dernière par les gaz qui circulent dans le collecteur 13.

Par exemple, pour un moteur à 4 temps à 12 cylindres, dont l'alésage est de 160 mm et dont la vitesse moyenne des pistons au régime de rotation nominal est de 10 m/s, alimenté par de l'air à 10 bars et à 60° C et dont le collecteur de gaz est parcouru par des gaz à 600°C sous 5 bars, ce collecteur aura un diamètre intérieur inférieur à 84 mm ($\mu > 0,3$) ou à 55 mm ($\mu > 0,7$).

De plus, la jonction 17 entre le conduit de dérivation 14, en aval des moyens d'étranglement 15, et le collecteur de gaz 13 est située en amont, dans le sens de l'écoulement des gaz provenant des chambres de travail 2 et circulant dans le collecteur de gaz 13, de la première jonction 18 du collecteur 13 avec les tubulures 12.

Les moyens d'étranglement 15 sont agencés de manière que la somme des forces, dues à la perte de charge qu'ils engendrent et s'appliquant sur ces moyens d'étranglement 15, soit compensée par une force d'équilibrage telle que la résultante de ces forces soit pratiquement nulle.

Ces moyens d'étranglement 15 peuvent être par construction insensibles à la perte de charge qu'ils engendrent sur le débit qui les traverse – tels une vanne-guillotine, un boisseau glissant ou tournant. Ils peuvent être également par construction soumis à des forces antagonistes, du fait de la perte de charge qu'ils engendrent, et qui s'annulent pratiquement, comme par exemple une vanne-papillon équilibrée. Ils peuvent être également sensibles à la perte de charge qu'ils engendrent, comme un clapet à siège par exemple, mais reliés mécaniquement à un organe d'équilibrage qui compense par construction la force résultant de l'action de la perte de charge sur les moyens d'étranglement par une force antagoniste de même amplitude.

Les moyens d'étranglement 15 sont reliés à un organe de commande sensible à un premier paramètre de fonctionnement du moteur 1 relié de façon biunivoque à la pression totale $P_2$ régnant directement à la sortie du compresseur 6 et à un deuxième paramètre de fonctionnement du moteur 1 relié de façon biunivoque à la pression totale $P_3$ régnant directement en amont de la turbine 5. Cet organe de commande, qui sera décrit plus en détail ci-après, est agencé de telle manière, d'une part, qu'il tende à fermer les moyens d'étranglement 15 lorsque ces deux pressions tendent à se rapprocher l'une de l'autre et réciproquement tende à ouvrir les moyens d'étranglement 15 lorsque ces pressions tendent à s'écarter l'une de l'autre et d'autre part que la différence de ces pressions ne dépende essentiellement que de la pression totale régnant à la sortie du compresseur 6 et varie dans le même sens que cette pression totale.

Selon le mode de réalisation de la figure 1, les moyens d'étranglement 15 sont constitués par un volet équilibré 22 calé sur un axe rotatif 23 et l'organe de commande est constitué par un moteur électrique réversible 19 qui entraîne l'axe 23 par l'intermédiare d'une transmission mécanique, laquelle a été représentée à titre d'exemple comme comprenant un pignon 20 calé sur l'arbre du moteur électrique 19 et par une crémaillère 21 engrenant avec ce pignon 20 et relié à l'axe 23 du volet 22. Le moteur électrique 19 est alimenté en courant variant dans le même sens que la valeur de l'écart $\varepsilon = \Delta P - \Delta Po$ par l'intermédiaire d'un comparateur 24 dont les entrées 24a et 24b reçoivent respectivement de comparateurs 25 et 26 des signaux représentatifs respectivement des différences $\Delta P = P_2 - P_3$ et $\Delta Po = f(P_2)$.

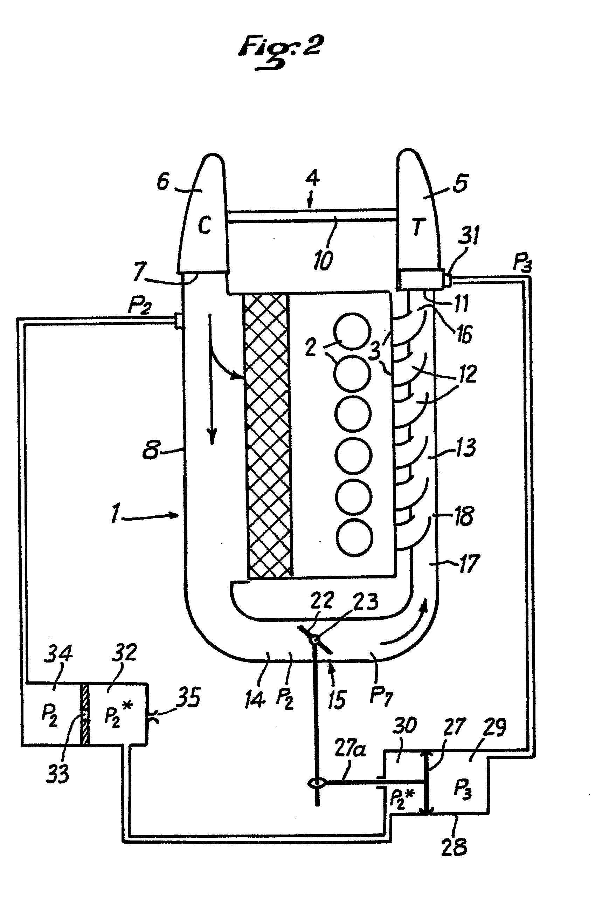

Selon le mode de réalisation de la figure 2, l'organe de commande susvisé est constitué par un piston 27 délimitant, dans un cylindre 28, deux chambres de volume variable 29 et 30 dont l'une, 29, communique avec une première cavité (capteur de pression) 31 où règne une pression statique qui varie de façon biunivoque dans le même sens que la pression totale $P_3$ et dont l'autre, 30, communique avec une deuxième cavité 32 où règne une pression $P_2^*$ qui varie de façon biunivoque dans le même sens que la pression totale $P_2$, cette pression $P_2^*$ étant une fraction de la pression $P_2$. A cet effet, la cavité 32 peut communiquer, par l'intermédiaire d'un premier orifice calibré 33, avec une chambre 34 où règne la pression $P_2$ et par l'intermédiaire d'un deuxième orifice calibré 35, avec l'atmosphère. Dans ce cas, $P_3 = P_2^* = kP_2$ et $\Delta P = P_2 - P_3 = (1-k) P_2$. La tige 27a du piston 27 est reliée aux moyens d'étranglement 15 comme la crémaillère 21 du mode de réalisation de la figure 1.

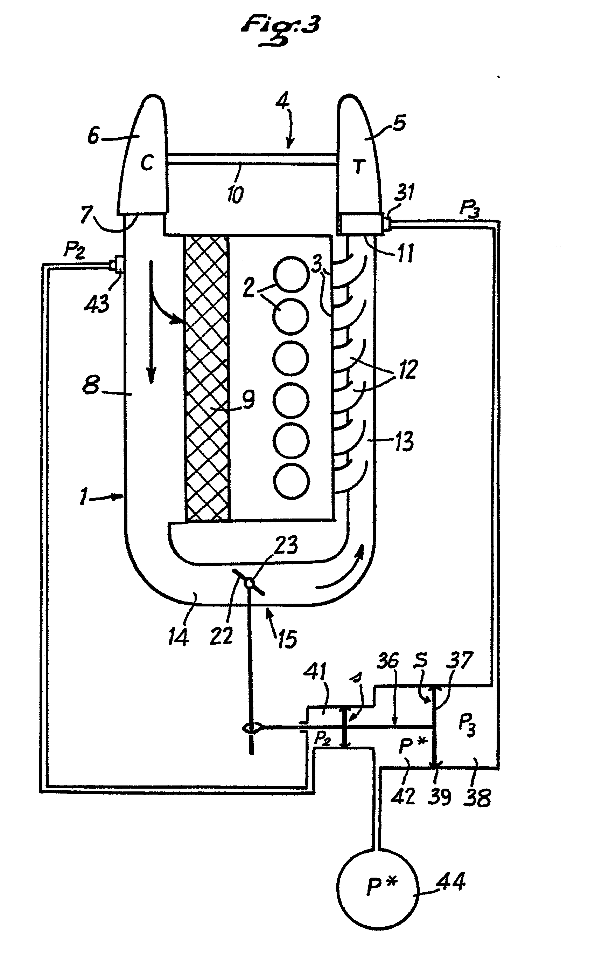

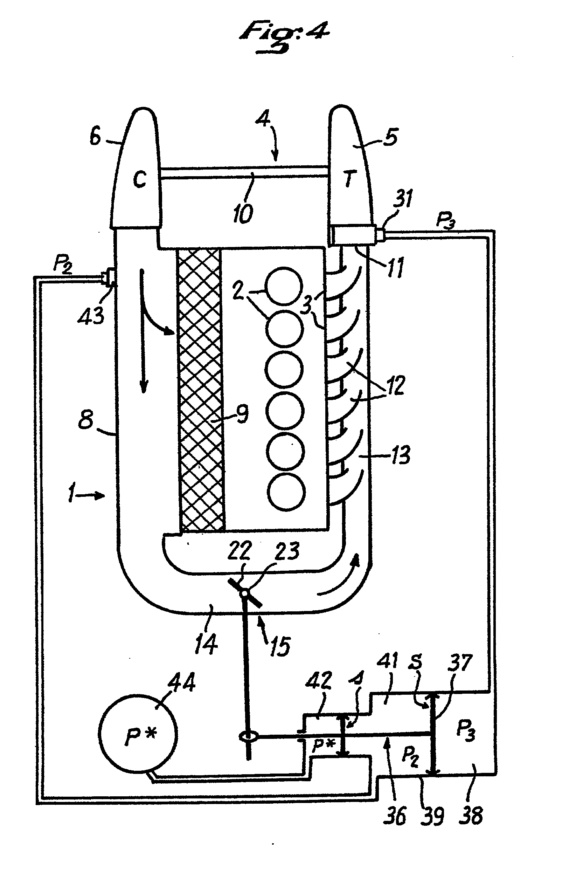

Selon les modes de réalisation des figures 3 et 4, l'organe de commande est constitué par un piston différentiel 36 comportant trois surfaces d'action mobiles de sections différentes, dont celle de plus grande section 37 délimite une chambre de volume variable 38 qui communique avec une première cavité 31 où règne une pression statique variant de façon biunivoque dans le même sens que la pression $P_3$ et par exemple égale à cette pression $P_3$ et dont les deux autres surfaces d'action délimitent deux autres chambres de volume variable 41 et 42 dont l'une 41 communique avec une deuxième cavité 43 où règne une pression statique sensiblement égale à la pression totale régnant à la sortie du compresseur 6, en amont des moyens d'étranglement 15, et l'autre 42 communique avec une troisième cavité 44 où règne une pression de référence $P^*$.

En général, le piston différentiel 36 délimite par ses deux extrémités, à l'intérieur d'un cylindre différentiel 39, une chambre de grande section 38 et une chambre de petite section ainsi qu'une chambre intermédiaire dont la surface d'action est constituée par la différence entre les sections des deux chambres extrêmes.

Selon le mode de réalisation de la figure 3, la chambre 41 est la chambre extrême opposée à la chambre 38 tandis que la chambre 42 est la chambre intermédiaire. Si on désigne par S et s respectivement les surfaces de grande section et de petite section du piston différentiel 36, l'équilibre du piston 36 s'exprime par les égalités suivantes:

$$P_3 . S = P_2 . s + P^* (S - s)$$
$$\Delta P = P_2 - P_3 = (P - P^*) \times \frac{S - s}{S}$$

Selon le mode de réalisation de la figure 4, la chambre 41 est la chambre intermédiaire tandis que la chambre 42 est la chambre extrême opposée à la chambre 38. L'équilibre du piston 36 s'exprime par les égalités suivantes:

$$P_3 . S = P^* . s + P (S - s)$$
$$\Delta P = P_2 - P_3 = (P_2 - P^*) \times \frac{s}{S} .$$

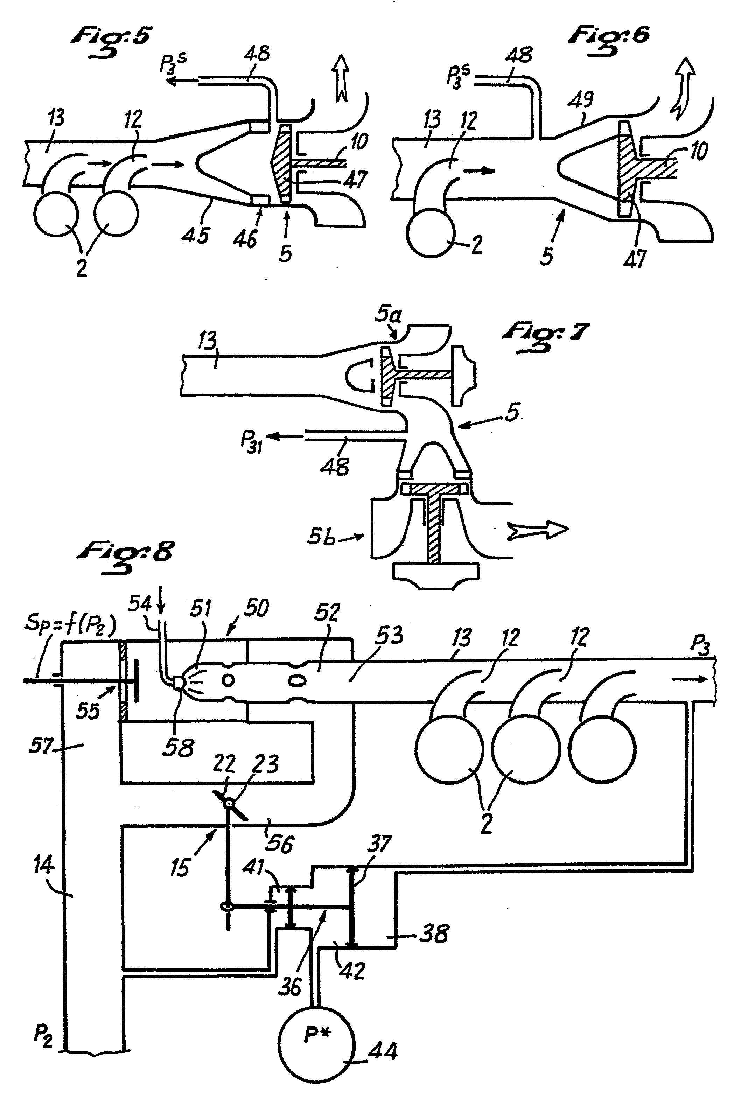

Les figures 5, 6 et 7 illustrent diverses façons de constituer ce qu'il est convenu d'appeler la "première cavité" où est prélevée une pression statique variant de façon biunivoque dans le même sens que la pression totale $P_3$ régnant immédiatement en amont de la turbine 5.

A la figure 5, on a représenté une turbine 5 à un seul étage avec son diffuseur 45, son distributeur 46 et son rotor 47, le diffuseur 45 assurant une augmentation progressive de la section et par conséquent un ralentissement de l'écoulement. Dans ce cas, la pression $P_3$ est prélevée par un tuyau 48 à l'entrée du rotor 47, en aval du distributeur 46.

A la figure 6, on a représenté également une turbine 5 à un seul étage mais sans distributeur, avec un carter d'entrée de gaz dimensionné de telle manière que la vitesse des gaz y ait une valeur sensiblement constante égale à la vitesse à la sortie du collecteur de gaz 13, ce carter étant désigné par 49. Dans ce cas, la pression $P_3$ est prélevée par un tuyau 48 à la sortie du collecteur de gaz 13.

A la figure 7, on a représenté une turbine 5 à deux étages, c'est-à-dire un étage basse pression 5a et un étage haute pression 5b. Dans ce cas, la pression $P_3$ est prélevée entre les deux étages 5a et 5b de la turbine 5.

Dans le mode de réalisation représenté partiellement à la figure 8, le conduit de dérivation 14 comporte une chambre de combustion auxiliaire 50 qui est divisée, d'amont en aval, en une zone primaire de combustion 51 et en une zone secondaire de dilution 52. Cette chambre de combustion auxiliaire 50 comporte une sortie de gaz 53 qui communique avec la partie amont du collecteur 13. La zone primaire 51 comporte au moins une buse d'alimentation en combustible 58 qui est reliée par une canalisation 54 à une source de combustible sous pression (non montrée). A l'aide de deuxièmes moyens d'étranglement 55, le débit d'air introduit dans la chambre de combustion auxiliaire 50 est réparti entre les zones primaire 51 et secondaire 52 de façon à adapter le débit d'air admis dans la zone primaire 51 au débit du combustible introduit par la buse d'alimentation 58. On pourra se reporter au FR-A 2 472 082 ainsi qu'à divers autres brevets de l'Etat Français pour obtenir plus de détails sur les moyens d'étranglement 55 et sur la chambre de combustion auxiliaire 50. On voit donc qu'au niveau de cette chambre de combustion auxiliaire 50, le conduit de dérivation 14 est divisé en deux branches dont la première 56 est munie des premiers moyens d'étranglement 15 et dont la deuxième 57 est munie des deuxièmes moyens d'étranglement 55. La chambre de combustion auxiliaire 50 mise à part, le mode de réalisation de la figure 8 est par exemple le même que celui de la figure 3.

De préférence, les deuxièmes moyens d'étranglement 55 sont reliés à un deuxième organe de commande 66 (figure 6) agencé pour faire varier la section de passage de ces deuxièmes moyens d'étranglement 55 en fonction de la pression de l'air régnant à la sortie du compresseur 6 et selon une loi établie à l'avance.

Cet organe de commande 66 pourra être par exemple un soufflet 67 délimitant deux cavités dont la première ou cavité intérieure 68 est à la pression $P_2$ et la seconde ou cavité extérieure 70 est à une pression de référence réglable $P_P$. Le soufflet soumis à la différence des pressions $P_2 - P_P$ est également soumis à l'action d'un ressort 71 incorporé au soufflet 67 et préalablement taré de telle manière que la section de passage $S_P$ diminue lorsque la pression d'air $P_2$ augmente selon une loi préétablie en fonction des réglages de la tension du ressort 71 et de la pression de référence $P_P$.

Quel que soit le mode de réalisation, les tubulures 12 ont avantageusement chacune la forme d'une tuyère convergente dont la sortie, comme on peut le voir aux figures 1 à 4 et 8, à la jonction avec le collecteur 13, est orientée selon le sens d'écoulement des gaz dans ce collecteur.

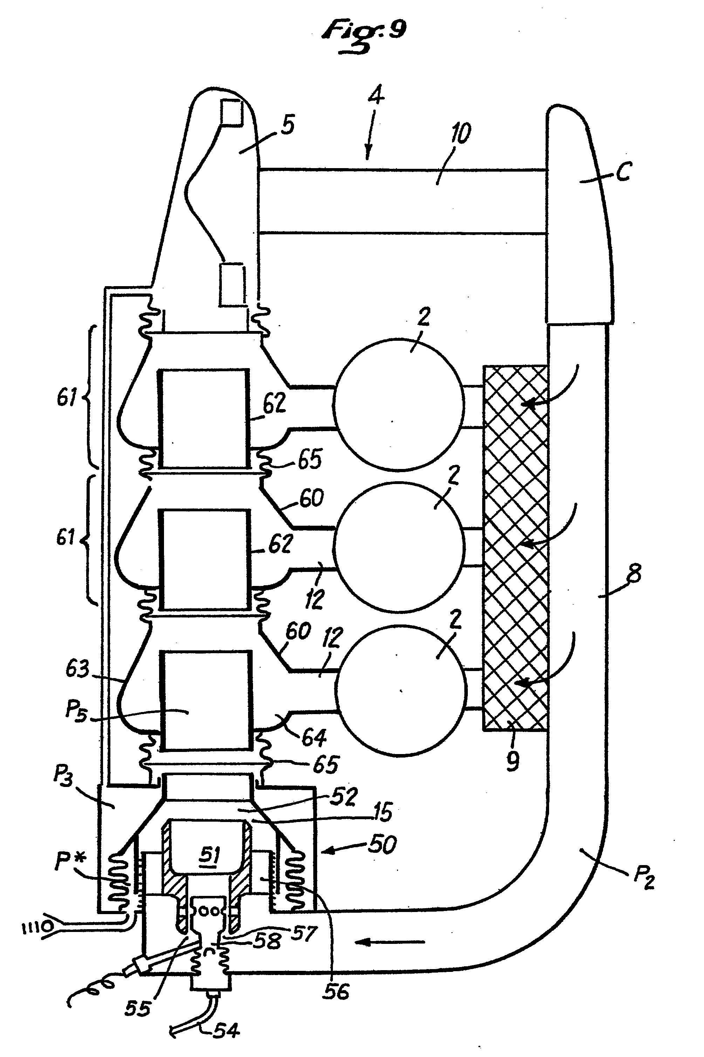

Pour simplifier la construction, comme représenté à la figure 9, les tubulures 12 sont constituées respectivement par des tuyères coniques 60, concentriques au collecteur de gaz 13. L'ensemble de ce collecteur 13 et des tubulures 12 est constitué de tronçons tous semblables 61 comportant chacun, d'une part, une âme cylindrique 62 et, d'autre part, une enveloppe concentrique 63. L'âme cylindrique 62 possède le diamètre du collecteur de gaz 13. L'extrémité amont (dans le sens de l'écoulement des gaz) de chaque tronçon communique soit avec la sortie de gaz du tronçon précédent s'il en existe, soit avec le conduit de dérivation 14 lorsqu'il s'agit du premier tronçon dans le sens de l'écoulement des gaz (c'est-à-dire du tronçon inférieur à la figure 9). L'enveloppe concentrique 63 délimite une cavité 64 qui communique avec la sortie de gaz de l'une des chambres de travail 2 et qui coopère avec l'extrémité aval de l'âme cylindrique 62 pour former une tuyère concentrique. Dans le cas où le conduit de dérivation 14 comporte une chambre de combustion auxiliaire 50 constituée d'une zone primaire de combustion 51 et d'une zone secondaire de dilution 52 située en aval de ladite zone primaire 51, l'extrémité amont du premier tronçon communique avec la sortie de gaz de la zone secondaire 52. Des moyens d'étanchéité 65, de type connu, sont interposés entre tronçons successifs 61 et entre la zone de dilution 52 de la chambre de combustion auxiliaire 50 et le tronçon 61 situé directement en aval de cette chambre.

Le reste du moteur représenté à la figure 9 est de type connu et, pour plus de détails, on pourra se reporter par exemple au US-A 4 026 115.

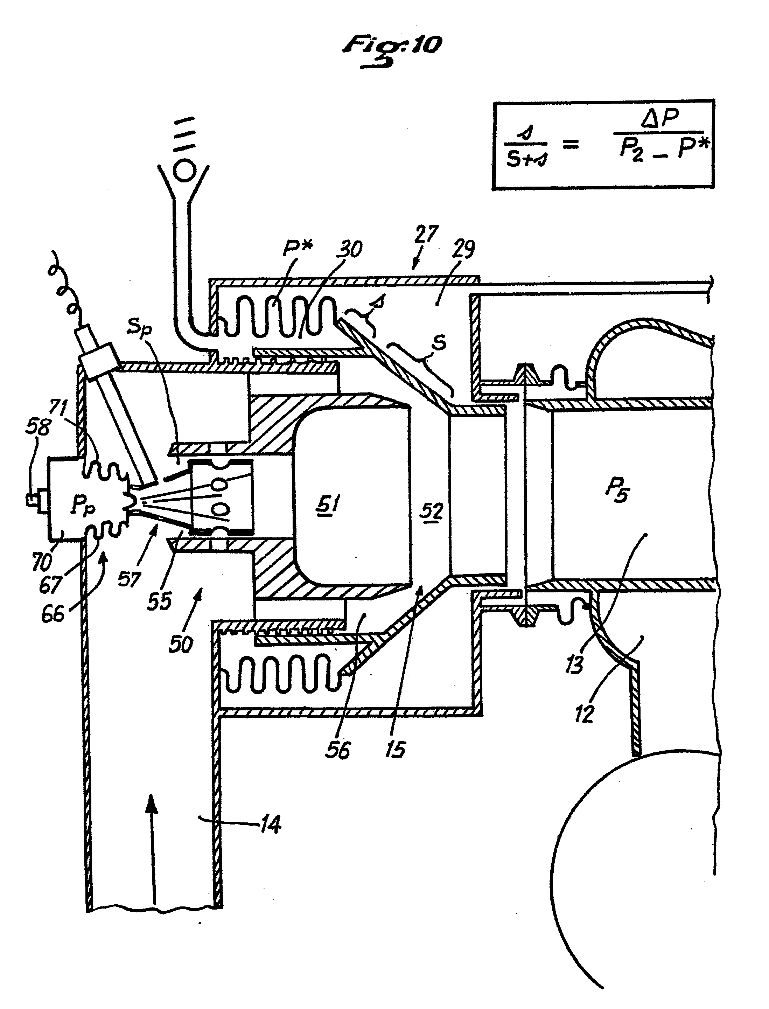

Selon le mode de réalisation de la figure 10 qui est un agrandissement de la figure 9, les premiers moyens d'étranglement 15 sont du type décrit en référence aux figures 3, 4 et 8. L'organe d'étranglement proprement dit est un boisseau cylindrique mobile et coulissant axialement, de même diamètre et de même axe que la chambre de combustion auxiliaire, elle-même fixe.

Considérons le fonctionnement de l'installation au rapport de pression nominal des turbocompresseurs délivrant de l'air à la pression:
$P_2 = 10$ bars.

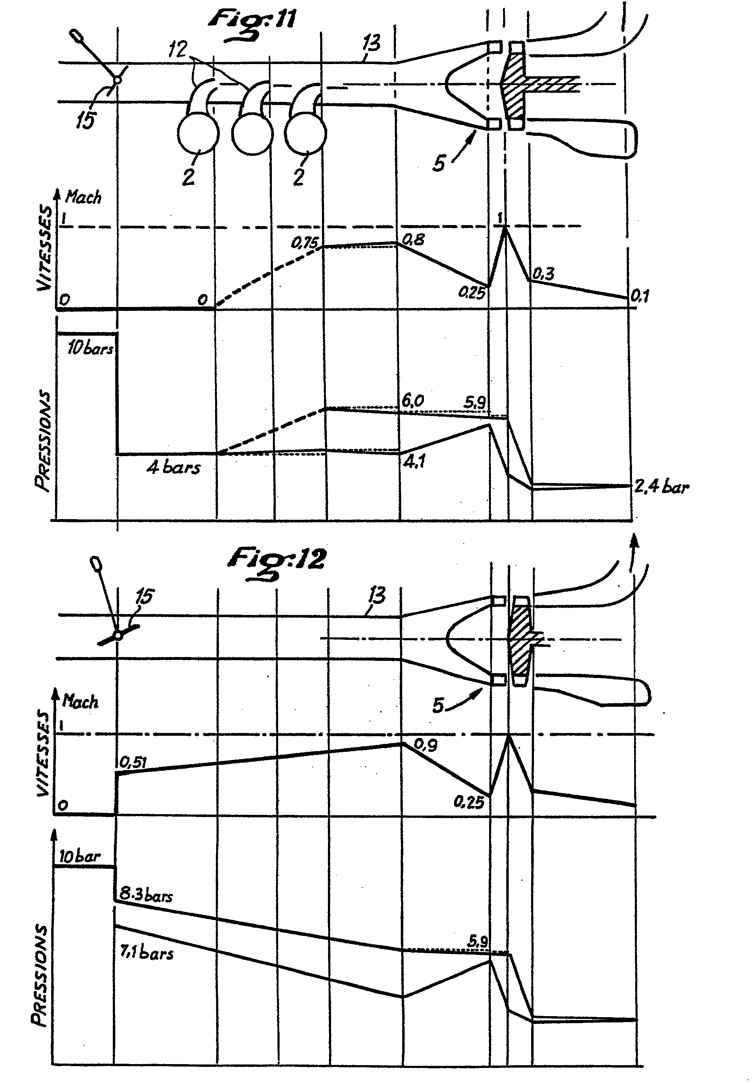

a – Fonctionnement en turbine à gaz, moteur arrêté (voir la figure 11).
La totalité de l'air fourni par le compresseur transite par le conduit de dérivation 14 et pénètre dans la zone primaire 51 de combustion à travers les seconds moyens d'étranglement 55 en position d'ouverture maximale, et dans la zone secondaire de dilution 52 à travers les premiers moyens d'étranglement 15 en position d'ouverture maximale.
Le débit de combustible dans la chambre est également maximal grâce au réglage approprié de la pression de référence $P_P$ dans la cavité intérieure 70.
Le collecteur de gaz 13 se comporte comme un organe passif entraînant une perte de charge par frottement et incidents de parcours de l'écoulement. La pression totale à l'entrée de la turbine est égale à:
$P_3 = 5,9$ bars.
La pression totale à l'entrée du collecteur de gaz est de 8,3 bars, la perte de charge de l'écoulement dans ce collecteur étant de: $8,3 - 5,9 = 2,4$ bars, soit 29% de la pression totale d'entrée. La perte de charge créée au passage de l'air dans les premiers moyens d'étranglement 15 est de: $10 - 8,3 = 1,7$ bar, soit 17% de la pression totale de l'air délivré par le compresseur.

b – Fonctionnement du moteur à la puissance nominale (vitesse et charge maximales) (voir la figure 11).
Le débit d'air circulant dans le conduit de dérivation est pratiquement nul (juste suffisant pour permettre la combustion d'un débit de veilleuse dans la chambre de combustion auxiliaire), les seconds moyens d'étranglement 55 ainsi que les premiers moyens d'étranglement 15 étant en position d'ouverture minimale. L'injection de quantité de mouvement par les tubulures 12 dans le collecteur de gaz 13 est maximale. Le collecteur de gaz se comporte comme un organe actif, "a perte de charge négative", en ce sens que la pression totale de l'écoulement augmente entre l'aval et l'amont.
Si la pression totale de l'écoulement est là encore:
$P_3 = 5,9$ bars
à l'entrée de la turbine, celle-ci sera de 4 bars seulement à l'entrée du collecteur de gaz 13.
L'injection de quantité de mouvement par les tubulures 12 aura ainsi généré une augmentation de la pression totale de l'écoulement de 1,9 bar.
La vitesse de l'écoulement à l'entrée du collecteur de gaz 13 étant nulle (le conduit de dérivation 14 étant pratiquement fermé), la pression statique dans le collecteur de gaz 13 sera égale à la pression totale, soit: $P_5 = 4$ bars.
La chute de pression de part et d'autre des premiers moyens d'étranglement 15 sera donc:
$\Delta P = P_2 - P_5 = 10 - 4 = 6$ bars,
c'est-à-dire 60% de la pression totale de l'air délivré par le compresseur.
Cette chute de pression est dans ce cas 3,5 fois plus élevée, dans ce fonctionnement au régime nominal, que dans le fonctionnement moteur arrêté, alors que la différence de pression totale entre le compresseur et la turbine n'a pas varié.

Cet exemple chiffré illustre l'avantage de l'invention sur une solution du type précédemment connu, telle que décrite dans le US-A 4 026 115, qui aurait entraîné de très grandes variations de la différence de pression $P_2 - P_3$ si l'on avait pris comme paramètres de réglage des premiers moyens d'étranglement 15 les pression $P_2$ et $P_7$ régnant directement de part et d'autre des dits premiers moyens d'étranglement. Ces grandes variations de pression auraient empêché, comme il est connu, de faire fonctionner le turbocompresseur dans sa zone de fonctionnement optimal près de la ligne de pompage. L'invention permet cette association de l'adaptation du turbocompresseur comme indiqué ci-dessus avec un mode de fonctionnement optimal, et du collecteur de gaz du type décrit ci-dessus qui permet d'abaisser la pression statique régnant dans le collecteur de gaz et par là même de réduire le travail de refoulement des gaz s'échappant des chambres de travail et donc de réduire de façon notable la consommation de combustible du moteur.

## Revendications

1. Moteur à combustion interne (1) à chambres de travail (2) de volume variable munies chacune d'au moins une entrée d'air et d'au moins une sortie de gaz (3), ce moteur (1) étant suralimenté par un groupe turbocompresseur (4) comportant au moins un compresseur (6) entraîné mécaniquement par au mons une turbine (5), chacune des susdites entrées d'air communiquant avec la sortie d'air (7) du compresseur (6) alors que chacune des susdites sorties de gaz (3) communique avec au moins un collecteur de gaz (13) relié à l'entrée de gaz (11) de la turbine (5), lequel moteur (1) comporte en outre un conduit de dérivation (14) qui relie la sortie d'air (7) du compresseur (6) à l'entrée de gaz (11) de la turbine (5) en court-circuitant les chambres de travail (2) et qui est muni de moyens d'étranglement (15) à section de passage variable, agencés de manière à engendrer une perte de charge telle que la différence de pression qui en résulte entre la sortie d'air (7) du compresseur (6) et l'entrée de gaz (11) de la turbine (5) ne dépende pratiquement que de la valeur de la pression régnant à la sortie d'air (7) du compresseur (6), lesquels moyens d'étranglement (15) sont agencés de manière que la somme des forces, dues à la perte de charge qu'ils engendrent et s'appliquant sur ces moyens d'étranglement (15), soit compensée par une force d'équilibrage telle que la résultante de ces forces soit pratiquement nulle, lesquels moyens d'étranglement (15) sont reliés à un organe de commande (19, 27, 36) sensible à un premier paramètre de fonctionnement du moteur (1) relié de façon biunivoque à la pression totale régnant à la sortie d'air (7) du compresseur (6) et à un deuxième paramètre de fonctionnement du moteur (1) relié de façon biunivoque à la pression totale régnant directement en amont de la turbine (5), lequel organe de commande (19, 27, 36) est agencé de manière telle d'une part qu'il tende à fermer les moyens d'étranglement (15) lorsque ces deux pressions tendent à se rapprocher l'une de l'autre et réciproquement tende à ouvrir lesdits moyens d'étranglement (15) lorsque ces pressions tendent à s'écarter l'une de l'autre et d'autre part que la différence de ces pressions ne dépende essentiellement que de la pression totale régnant à la sortie d'air (7) du compresseur (6) et varie dans le même sens que cette pression totale, caractérisé en ce que

    a) chacune des susdites sorties de gaz (3) communique par une tubulure (12) avec le ou chaque collecteur de gaz (13);

    b) le collecteur de gaz (13) a une section sensiblement constante et suffisamment faible pour que, en fonctionnement au régime nominal de rotation du moteur (1), la vitesse de l'écoulement des gaz dans le collecteur de gaz (13), directement en aval de la dernière jonction avec lesdites tubulures (12), soit au moins égale au nombre de Mach de 0,3;

    c) la jonction entre le conduit de dérivation (14) en aval des moyens d'étranglement (15) et le collecteur de gaz (13) est située en amont, dans le sens de l'écoulement des gaz provenant des chambres de travail (2) et circulant dans le collecteur de gaz (13), de la première jonction dudit collecteur de gaz (13) avec lesdites tubulures (12); et

    d) le susdit premier paramètre de fonctionnement du moteur (1) est relié de façon biunivoque à la pression totale régnant directement à la sortie d'air (7) du compresseur (6).

2. Moteur selon la revendication 1, caractérisé en ce que les susdites tubulures (12) ont chacune la forme d'une tuyère convergente, dont la sortie, à la jonction avec le collecteur de gaz (13), est orientée selon le sens d'écoulement des gaz dans ce collecteur (13).

3. Moteur selon l'une des revendications 1 et 2, caractérisé en ce que l'organe de commande susvisé est constitué par un piston (27) délimitant au moins deux chambres de volume variable (29, 30) dont l'une (29) communique avec une première cavité (31) où règne une pression statique qui varie de façon biunivoque dans le même sens que la pression totale régnant immédiatement à l'entrée (11) de la turbine (5) et dont l'autre communique avec une deuxième cavité (32) où règne une pression $P_2^*$ qui varie de façon biunivoque dans le même sens que la pression totale qui règne à la sortie (7) du compresseur (6) en amont des susdits moyens d'étranglement (15), cette pression $P_2^*$ étant égale à une fraction de la pression $P_2$.

4. Moteur selon l'une des revendications 1 et 2, caractérisé en ce que l'organe de commande susvisé est constitué par un piston différentiel (36) comportant au moins trois surfaces d'action mobiles ou déformables de sections différentes, dont celle de plus grande section (37) délimite une chambre de volume variable (38) qui communique avec une première cavité (31) où règne une pression statique variant de façon biunivoque dans le même sens que la pression totale régnant immédiatement en amont de la turbine (5) et dont les deux autres surfaces d'action délimitent deux autres chambres de volume variable (41, 42) dont l'une communique avec une deuxième cavité (43) où règne une pression statique sensiblement égale à la pression totale régnant à la sortie (7) du compresseur (6), en amont des susdits moyens d'étranglement (15), et l'autre communique avec une troisième cavité (44) où règne une pression de référence $P^*$.

5. Moteur selon l'une des revendications 3 et 4, caractérisé en ce que la première cavité susvisée est constituée par l'espace situé en aval du distributeur (46) de la turbine (5) et en amont de la roue (47) de ladite turbine (5).

6. Moteur selon l'une des revendications 3 et 4, dont le groupe turbocompresseur (4) comporte au moins une première et une deuxième turbines (5a, 5b) disposées en série, caractérisé en ce que la première cavité est constituée par la liaison entre la sortie de la première turbine (5a) et l'entrée de la deuxième turbine (5b).

7. Moteur selon l'une quelconque des revendications 1 à 6, dont le conduit de dérivation (14) comporte une chambre de combustion auxiliaire (50), constituée d'une zone primaire de combustion (51) et d'une zone secondaire de dilution (52) située en aval de ladite zone primaire (51), caractérisé en ce que le conduit de dérivation (14) est divisé en au moins deux branches (56, 57) dont la première (56) alimente en air ladite zone secondaire (52) et est munie des susdits moyens d'étranglement (15), désignés ci-après par "premiers moyens d'étranglement", et dont la deuxième (57) alimente en air ladite zone primaire (51) et est munie de deuxièmes moyens d'étranglement (55) à section de passage variable indépendamment de celle des premiers moyens d'étranglement (15).

8. Moteur selon la revendication 7, caractérisé en ce que les deuxièmes moyens d'étranglement (55) sont reliés à un deuxième organe de commande agencé pour faire varier la section de passage des deuxièmes moyens d'étranglement (55) en fonction de la pression de l'air régnant à la sortie (7) du compresseur (6) et selon une loi établie à l'avance.

9. Moteur selon l'une des revendications 7 et 8, caractérisé en ce que les susdites tubulures (12) sont constituées respectivement par des tuyères coniques concentriques au collecteur de gaz (13) et l'ensemble du collecteur (13) et des tubulures (12) est constitué de tronçons (61) tous semblables comportant chacun, d'une part, une âme cylindrique (62) qui possède le diamètre du collecteur de gaz (13) et dont l'extrémité amont, dans le sens de l'écoulement des gaz, communique soit avec la sortie de gaz du tronçon (61) précédent s'il en existe, soit avec le conduit de dérivation (14) lorsqu'il s'agit du premier tronçon dans le sens de l'écoulement des gaz, et d'autre part, une enveloppe concentrique (63) délimitant une cavité (64) qui communique avec la sortie de gaz (3) de l'une des chambres de travail (2) et qui coopère avec l'extrémité aval de l'âme cylindrique (62) pour former une tuyère concentrique.

10. Moteur selon l'ensemble des revendications 7 et 9, caractérisé en ce que l'extrémité amont du premier tronçon communique avec la sortie de gaz de ladite zone secondaire de dilution (52).

**Patentanspüche**

1. Brennkraftmaschine (1) mit Arbeitskammern bzw. Zylindern (2) von variablem Volumen, von denen jede jeweils mit wenigstens einem Lufteinlaß und einem Gasauslaß (3) versehen ist, wobei der Motor (1) mittels einer Turbokompressorgruppe (4) vorverdichtet bzw. aufgeladen ist, die wenigstens einen Kompressor (6) umfaßt, der mechanisch von wenigstens einer Turbine (5) angetrieben ist, wobei jeder der genannten Lufteinlässe mit dem Luftauslaß (7) des Kompressors (6) in Verbindung steht, während jeder der genannten Gasauslässe (3) mit wenigstens einem Gasfang bzw. einer Gassammelröhre (13) in Verbindung steht, der bzw. die mit dem Gaseinlaß (11) der Turbine (5) verbunden ist, welcher Motor (1) außerdem eine Umgehungsleitung (14) umfaßt, die den Luftauslaß (7) des Kompressors (6) mit dem Gaseinlaß (11) der Turbine verbindet, indem sie die Arbeitskammern (2) überbrückt bzw. kurzschließt, und die mit Drosseleinrichtungen (15) mit variablem Durchlaßquerschnitt versehen ist, die so ausgebildet sind, daß sie einen solchen Gefälleverlust erzeugen, daß das Druckgefälle zwischen dem Luftauslaß (7) des Kompressors (6) und dem Gaseinlaß (11) der Turbine (5) praktisch nur vom Wert des Druckes abhängt, der am Luftauslaß (7) des Kompressors (6) herrscht, welche Drosseleinrichtungen (15) so ausgebildet sind, daß die Summe der Kräfte, die auf den durch sie geschaffenen Gefälleverlust zurückzuführen sind und die auf die genannten Drosseleinrichtungen (15) einwirken, durch eine Ausgleichskraft so kompensiert wird, daß diese Resultate dieser Kräfte gleich Null ist, daß die Drosseleinrichtungen (15) mit einem Steuerorgan (19, 27, 36) verbunden sind, das auf einen ersten Funktionsparameter des Motors (1) anspricht, der auf eineindeutige Weise mit dem Gesamtdruck verbunden ist, der am Luftauslaß (7) des Kompressors (6) herrscht und mit einem zweiten Funktionsparameter des Motors (1) verbunden ist, der auf eineindeutige Weise mit dem Gesamtdruck verknüpft ist, der direkt stromaufwärts von der Turbine (5) herrscht, welches Steuerorgan (19, 27, 36) so ausgebildet ist, daß es einerseits die Drosseleinrichtungen (15) verschließt, wenn die beiden Drücke die Tendenz zeigen, sich einander zu nähern und umgekehrt die Drosseleinrichtung (15) öffnet, wenn die beiden Drücke die Tendenz zeigen, voneinander abzuweichen, und daß anderseits das Gefälle zwischen diesen Drücken nur vom am Luftauslaß (7) des Kompressors (6) vorherrschenden Gesamtdruck abhängt und sich im gleichen Sinne wie dieser Gesamtdruck ändert, dadurch gekennzeichnet, daß

a) jeder der genannten Gasauslässe (3) über eine Rohrleitung (12) mit der oder jeder der Gassammelröhren (13) in Verbindung steht;

b) die Gassammelröhre (13) einen im wesentlichen konstanten Querschnitt aufweist, der ausreichend gering dimensioniert ist, sodaß in Abhängigkeit von der Nennleistung des Motors (1) die Strömungsgeschwindigkeit der Gase in der Gassammelröhre (13) direkt stromabwärts von der genannten Verbindungsstelle mit den genannten Rohrleitungen (12) wenigstens gleich Mach 0,3 ist;

c) die Verbindungsstelle zwischen der Umgehungsleistung (14) stromabwärts von der Drosseleinrichtung (15) und der Gassammelröhre (13) stromaufwärts in Strömungsrichtung der Gase, die aus den Arbeitskammern (2) kommen und in der Gassammelröhre (13) zirkulieren, von der ersten Verbindungsstelle der genannten Gassammelröhre (13) mit den genannten Rohrleitungen (12) gelegen ist, und

d) der genannte erste Funktionsparameter des Motors (1) auf eineindeutige Weise mit dem Gesamtdruck verknüpft ist, der direkt am Luftauslaß (7) des Kompressors (6) vorherrscht.

2. Motor nach Anspruch 1, dadurch gekennzeichnet, daß die genannten Rohrleitungen (12) jeweils die Form einer konvergierenden Düse aufweisen, deren Auslaß an der Verbindungsstelle mit der Gassammelröhre (13) in Strömungsrichtung der Gase in dieser Sammelröhre (13) ausgerichtet ist.

3. Motor nach Anspruch 1 und 2, dadurch gekennzeichnet, daß das genannte Steuerorgan aus einem Kolben (27) besteht, der wenigstens zwei Kammern (29, 30) von variablem Volumen begrenzt, von denen die eine (29) mit einem ersten Hohlraum (31) in Verbindung steht, in dem ein statischer Druck herrscht, der auf eineindeutige Weise im gleichen Sinne variiert wie der Gesamtdruck, der unmittelbar am Einlaß (11) der Turbine (5) herrscht und von denen die andere (30) mit einem zweiten Hohlraum (32) in Verbindung steht, in dem ein Druck P₂* herrscht, der auf eineindeutige Weise im gleichen Sinne variiert wie der Gesamtdruck, der am Auslaß (7) des Kompressors (6) stromaufwärts von der genannten Drosseleinrichtung (15) herrscht, wobei dieser Druck P₂* gleich einem Bruchteil des Druckes P₂ ist.

4. Motor nach Anspruch 1 oder 2, dadurch gekennzeichnet, daß das genannte Steuerorgan aus einem Differentialkolben (36) besteht, der wenigstens drei mobile oder verformbare Arbeitsflächen von unterschiedlichen Querschnitten umfaßt, von denen die mit dem größten Querschnitt (37) eine Kammer mit variablem Volumen (38) begrenzt, die mit einem ersten Hohlraum (31) in Verbindung steht, in dem ein statischer Druck herrscht, der auf eineindeutige Weise im gleichen Sinne variiert wie der Gesamtdruck, der unmittelbar stromaufwärts von der Turbine (5) herrscht und dessen beide andere Arbeitsflächen zwei andere Kammern von variablem Volumen (41, 42) begrenzen, von denen eine mit einem zweiten Hohlraum (43) in Verbindung steht, in dem ein statischer Druck herrscht, der im wesentlichen gleich dem Gesamtdruck ist, der am Auslaß (7) des Kompressors (6) stromaufwärts von der genannten Drosseleinrichtung (15) herrscht, und von denen die andere mit einem dritten Hohlraum (44) in Verbindung steht, in dem ein Bezugsdruck P* herrscht.

5. Motor nach Anspruch 3 oder 4, dadurch gekennzeichnet, daß der genannte erste Hohlraum von dem Raum gebildet wird, der stromabwärts vom Verteiler (46) der Turbine (5) und stromaufwärts vom Rad (47) der genannten Turbine (5) gelegen ist.

6. Motor nach Anspruch 3 oder 4, dessen Turbokompressorgruppe (4) wenigstens eine erste und eine zweite Turbine (5a, 5b) umfaßt, die in Reihe geschaltet sind, dadurch gekennzeichnet, daß der erste Hohlraum durch die Verbindung zwischen dem Auslaß der ersten Turbine (5a) und dem Einlaß der zweiten Turbine (5b) gebildet wird.

7. Motor nach einem der Ansprüche 1 bis 6, dessen Umgehungsleitung (14) eine Hilfsbrennkammer (50) umfaßt, die aus einer primären Verbrennungszone (51) und einer sekundären Verdünnungszone (52) besteht, die stromabwärts von der genannten primären Zone gelegen ist, dadurch gekennzeichnet, daß die Umgehungsleitung (14) in wenigstens zwei Zweige (56, 57) geteilt ist, deren erster (56) die genannte sekundäre Zone (52) mit Luft versorgt und mit der genannten Drosseleinrichtung (15) versehen ist, die in der Folge als "erste Drosseleinrichtung" bezeichnet wird, und deren zweiter (57) die genannte erste Zone (51) mit Luft versorgt und mit einer zweiten Drosseleinrichtung (55) versehen ist, deren Querschnitt unabhängig von jenem der ersten Drosseleinrichtung (15) variabel ist.

8. Motor nach Anspruch 7, dadurch gekennzeichnet, daß die zweite Drosseleinrichtung (55) mit einem zweiten Steuerorgan verbunden ist, das dazu ausgebildet ist, den Durchlaßquerschnitt der zweiten Drosseleinrichtung (55) in Abhängigkeit vom Luftdruck, der am Auslaß (7) des Kompressors herrscht und auf vorgegebene Weise zu variieren.

9. Motor nach Anspruch 7 oder 8, dadurch gekennzeichnet, daß die genannten Rohrleitungen (12) jeweils aus konischen Düsen konzentrisch zur Gassammelröhre (13) bestehen und die aus der Gassammelröhre (13) und den Rohrleitungen (12) bestehende Einheit von Rohrschüssen (61) gebildet wird, die alle ähnlich sind und von denen jeder einerseits eine zylindrische Seele (62) aufweist, die den Durchmesser der Gassammelröhre (13) besitzt und deren stromaufwärts gelegenes Ende in Durchflußrichtung der Gase entweder mit dem Gasauslaß des vorhergehenden Rohrschusses (61), falls er vorhanden ist, oder mit der Umgehungsleitung (14) in Verbindung steht, wenn es sich um den ersten Rohrschuß in Durchflußrichtung der Gase handelt, und anderseits eine konzentrische Hülle (63) aufweist, die einen Hohlraum (64) begrenzt, der mit dem Gasauslaß (3) einer der Arbeitskammern (2) in Verbindung steht und mit dem stromabwärts gelegenen Ende der zylindrischen Seele (62) zusammenwirkt, um eine konzentrische Düse zu bilden.

10. Motor nach den Ansprüchen 7 und 9, dadurch gekennzeichnet, daß das stromaufwärts gelegene Ende des ersten Rohrschusses mit dem Gasauslaß der genannten sekundären Verdünnungszone (52) in Verbindung steht.

**Claims**

1. An internal combustion engine (1) comprising variable-volume work chambers (2) each provided with at least one air inlet and at least one gas outlet (3), this engine (1) being supercharged by a turbocompressor unit (4) comprising at least one compressor (6) mechanically driven by at least one turbine (5), each of said air inlets communicating with the air outlet (7) of the compressor (6) whereas each of said gas outlets (3) communicates with at least one gas manifold (13) connected to the gas inlet (11) of the turbine (5), which engine (1) further comprises a bypass pipe (14) which connects the air outlet (7) of the compressor (6) to the gas inlet (11) of the turbine (5) by bypassing the work chambers (2) and which is provided with throttling means (15) defining a passage of variable section so adapted as to produce such pressure drop that the resulting pressure difference between the air outlet (7) of the compressor (6) and the gas inlet (11) of the turbine (5) substantially only depends on the value of the pressure prevailing in the air outlet (7) of the compressor (6), which throttling means (15) are so adapted that the sum of forces due to the pressure drop which they produce and which is applied to said throttling means (15), is compensated by a balancing force such that the resultant of these forces is substantially nil, which throttling means (15) are connected to a control means (19, 27, 36), responsive to a first parameter of operation of the engine (1) related in a biunivocal manner to the total pressure prevailing in the air outlet (7) of the compressor (6) and to a second parameter of operation of the engine (1) related in a bi-univocal manner to the total pressure prevailing directly upstream of the turbine (5), which control means (19, 27, 36) is so adapted that on one hand it tends to close said throttling means (15) when said two pressures tend to approach each other and reciprocally tends to open said throttling means (15) when said pressures tend to depart from each other and that on the other hand the difference between said pressures substantially depends only on the total pressure prevailing in the air outlet (7) of the compressor (6) and varies in the same direction as the last-mentioned total pressure, characterised in that:

a) each of the said gas outlets (3) communicates through a pipe (12) with the or each gas manifold (13);

b) the gas manifold (13) has a substantially constant section which is sufficiently small so that, in the rated running speed of the engine (1), the velocity of the flow of the gases in the gas manifold (13), directly downstream of the last junction with said pipes (12), is equal to at least the Mach number 0.3;

c) the junction between the bypass pipe (14) downstream of the throttling means (15) and the gas manifold (13) is located upstream of the first junction of said gas manifold (13) with said exhaust pipes (12) relative to the direction of flow of the gases coming from the work chambers (2) and circulating in the gas manifod (13); and

d) the said first parameter of operation of the engine (1) is related in a bi-univocal manner to the total pressure prevailing directly in the air outlet (7) of the compressor (6).

2. An engine according to claim 1, characterised in that said pipes (12) each have the shape of a convergent nozzle whose outlet at the respective junction with the gas manifold (13) is oriented in the direction of flow of the gases in said manifold (13).

3. An engine according to any one of claims 1 and 2, characterised in that said control means comprises a piston (27) defining at least two variable-volume chambers (29, 30) of which one (29) communicates with a first cavity (31) in which prevails a static pressure which varies in a bi-univocal manner in the same direction as the total pressure prevailing immediately in the inlet (11) of the turbine (5) and of which the other chamber communicates with a second cavity (32) in which prevails a pressure $P_2^*$ which varies in a bi-univocal manner in the same direction as the total pressure which prevails in the outlet (7) of the compressor (6) upstream of said throttling means (15), said pressure $P_2^*$ being equal to a fraction of the pressure $P_2$.

4. An engine according to any one of claims 1 and 2, characterised in that said control means comprises a differential piston (36) having at least three active surfaces which are movable or deformable and have different sections, of which that (37) having the largest section defines a variable-volume chamber (38) which communicates with a first cavity (31) in which prevails a static pressure which varies in a bi-univocal manner in the same direction as the total pressure prevailing immediately upstream of the turbine (5), the other two active surfaces defining two other variable-volume chambers (41, 42) of which one chamber communicates with a second cavity (43) in which prevails a static presssure substantially equal to the total pressure prevailing in the outlet (7) of the compressor (6) upstream of said throttling means (15) and the other chamber communicates with a third cavity (44) in which prevails a reference pressure $P^*$.

5. An engine according to any one of claims 3 and 4, characterised in that the said first cavity comprises a space located downstream of the distributor (46) of the turbine (5) and upstream of the wheel (47) of the said turbine (5).

6. An engine according to any one of claims 3 and 4, whose turbocompressor unit (4) comprises at least a first and a second turbines (5a, 5b) disposed in a series, characterised in that the first cavity is constituted by a connection between the outlet of the first turbine (5a) and the inlet of the second turbine (5b).

7. An engine according to any one of claims 1 to 6, the bypass pipe (14) of which comprises an auxiliary combustion chamber (50) constituted by a primary combustion zone (51) and a secondary dilution zone (52) located downstream of said primary zone (51), characterised in that the bypass pipe (14) is divided into at least two branches (56, 57) of which the first branch (56) feeds air to said secondary zone (52) and is provided with said throttling means (15), hereinafter designated "first throttling means", and of which the second branch (57) feeds air to said primary zone (51) and is provided with second throttling means (55) defining a passage having a section which is variable independently of the section of the pasage of the first throttling means (15).

8. An engine according to claim 7, characterised in that the second throttling means (55) are connected to a second control means adapted to vary the passage section of said second throttling means (55) as a function of the pressure of the air prevailing in the outlet (7) of the compressor (6) and according to a previously-established law.

9. An engine according to any one of claims 7 and 8, characterised in that said pipes (12) are respectively constituted by frustoconical nozzles concentric with the gas manifold (13) and the assembly of the manifold (13) and of the pipes (12) is made of sections (61) which are all similar and each comprise on one hand a cylindrical core (62) which has the same diameter as the diameter of the gas manifold (13), and the upstream end of which, relative to the direction of flow of the gases, communicates either with the gas outlet of the preceding section (61), if one exists, or with the bypass pipe (14) when it concerns the first section, relative to the direction of flow of the gases, and on the other hand a concentric case (63) defiining a cavity (64) which communicates with the gas outlet (3) of the respective one of the work chambers (2) and which cooperates with the downstream end of the cylindrical core (62) so as to form a concentric nozzle.

10. An engine according to claims 7 and 9 taken together, characterised in that the upstream end of the first section cmmunicates with the gas outlet of said secondary dilution zone (52).

# Fig. 1

# Fig. 2

*Fig:3*

Fig: 4

Fig:5

Fig:6

Fig:7

Fig:8

## Fig.9

EP 0 210 100 B1

Fig.10

$$\frac{s}{S+s} = \frac{\Delta P}{P_2 - P^*}$$

EP 0 210 100 B1

Fig:11

Fig:12